# EUROPÄISCHE PATENTSCHRIFT

(11) **EP 3 762 790 B1**
(45) Veröffentlichungstag und Bekanntmachung des Hinweises auf die Patenterteilung: **08.11.2023**
(21) Anmeldenummer: 19709892.4
(22) Anmeldetag: 07.03.2019
(51) Int. Cl.: G05B 13/02, G05B 15/02

(54) **VERFAHREN ZUR BESTIMMUNG VON IN EINEM MESSSIGNAL VORKOMMENDEN SCHWINGUNGEN**
METHOD FOR DETERMINING OSCILLATIONS OCCURRING IN A MEASUREMENT SIGNAL
PROCÉDÉ DE DÉTERMINATION DE VIBRATIONS SE PRODUISANT DANS UN SIGNAL DE MESURE

(30) Priorität: 09.03.2018 DE 102018203574
(43) Veröffentlichungstag der Anmeldung: 13.01.2021
(73) Patentinhaber: Robert Bosch GmbH, 70442 Stuttgart (DE)
(72) Erfinder: GALL, Jan, 70435 Stuttgart (DE); SCHWAMBERGER, Valentin, 72074 Tuebingen (DE); WELFONDER, Torsten, 71229 Leonberg (DE); BOTT, Andre, 71642 Ludwigsburg-Poppenweiler (DE)
(86) Internationale Anmeldenummer: PCT/EP2019/055630
(87) Internationale Veröffentlichungsnummer: WO 2019/170789

(56) Entgegenhaltungen:
- DE-A1-102009 020 744
- US-A1- 2009 143 919

## Beschreibung

Die vorliegende Erfindung betrifft ein Verfahren zur Bestimmung von in einem Messsignal vorkommenden Schwingungen, welches beispielsweise bei einer Überwachung und/oder einer adaptiven Regelung eines technischen Systems wie zum Beispiel einer Heizungs-, Lüftungs- und Klimaanlage eingesetzt werden kann.

### Stand der Technik

Häufig werden aufgrund ihrer wohlbekannten und einfachen Anwendung sogenannte PID-Regler zur Regelung von beispielsweise Heizungs-, Kühlungs- und Klimaanlagen, Unterhaltungs- und Haushaltselektronik, oder industriellen Prozessen, wie sie zum Beispiel in der chemischen Industrie vorkommen, eingesetzt. Bei einem PID-Regler handelt es sich um einen Regler mit einem Proportionalanteil, einem Integralanteil und einem Differentialanteil.

Die Parameter derartiger PID-Regler werden oftmals mit der heuristischen Methode von Ziegler und Nichols eingestellt, welche zwar insbesondere bei stark verzögernden stabilen Prozessen ein gutes Störverhalten, jedoch ein schwingendes Führungsverhalten ergibt. Das heißt, die Methode von Ziegler und Nichols ist vor allem für Prozesse geeignet, deren Lasteigenschaften sich über die Zeit nicht signifikant ändern und bei denen ein Überschwingen nicht stört.

Sind größere Änderungen in der Prozessdynamik bzw. bei den Lasteigenschaften zu erwarten, werden daher die Reglerparameter häufig adaptiv eingestellt. Hierzu wird die Regelgröße laufend in Bezug auf Schwingungen um den Sollwert überwacht. Sobald Beschreibung (Reinfassung)
eine Schwingung festgestellt wird, werden die Reglerparameter derart angepasst, dass die Schwingung in der Regelgröße eliminiert wird (Li et al., "Patents, software and hardware for PID control: an overview and analysis of the current art", IEEE Control Systems Magazine, 26(1), Seiten 42-54, 2006).

Dabei ist die Güte und Genauigkeit der Ermittlung der Schwingungen in der Regelgröße entscheidend für das Regelverhalten, insbesondere für das mit dem adaptiven Regler erzielbare Führungsverhalten.

Grundsätzlich kann die Regelgröße mittels der schnellen Fourier-Transformation (FFT) in ihre Schwingungsanteile zerlegt werden. Dabei hat jedoch ein breites Fenster eine gute Auflösung im Frequenzbereich bei einer schlechten Auflösung im Zeitbereich zur Folge, was es schwierig macht, sich ändernde Frequenzen zu detektieren. Bei einem schmalen Fenster ergibt sich der umgekehrte Effekt. Die schnelle Fourier-Transformation geht davon aus, dass es sich um periodische Signale handelt, sodass Informationen über den genauen Zeitpunkt, an welchem eine Schwingung beginnt oder aufhört, verloren gehen.

Aus der WO 2010/054657 A1 ist ein Regelungsverfahren bekannt, bei welchem eine Abklingrate einer Schwingung in einer Stellgröße eines PID-Reglers ermittelt und in Abhängigkeit von der Abklingrate die Stellgröße erhöht wird. Dabei indiziert eine hohe Abklingrate ein hochschwingendes System nahe der Stabilitätsgrenze, sodass die Verstärkung der Stellgröße reduziert wird, und eine geringe Abklingrate indiziert eine übermässige Dämpfung, sodass die Verstärkung der Stellgröße erhöht wird.

Das Dokument US 2009/143919 A1 offenbart ein Verfahren zum Einstellen der Reglerparameter eines stetigen Reglers in einem Regelkreis einen Thermostaten.

Das Dokument DE 10 2009 020744 A1 offenbart ein Verfahren zum Unterdrücken von Schwingungen in einer Anlage mit einem Stellantrieb zur Betätigung einer Klappe oder eines Ventils für die Dosierung eines Gas- oder Flüssigkeitsvolumenstroms.

### Offenbarung der Erfindung

Gemäß einem ersten Aspekt stellt die vorliegende Erfindung ein Verfahren zur Bestimmung von in einem Messsignal vorkommenden Schwingungen mit den Merkmalen des Anspruchs 1 bereit. Das Verfahren umfasst das Empfangen eines Messsignals, das Bestimmen der Extremwerte des empfangenen Messsignals und das Ermitteln von geschlossenen Schleifen des Messsignals. Hierbei wird zum Ermitteln der geschlossenen Schleifen des Messsignals das Rainflow-Zählverfahren eingesetzt. Dabei werden die (sämtliche) geschlossenen Schleifen des Messsignals durch a) Identifizieren einer (ersten) geschlossenen Schleife im Messsignal, wobei die geschlossene Schleife durch eine erste Halbschleife und eine zur ersten Halbschleife korrespondierende zweite Halbschleife mit identischer Schwingbreite und entgegengesetzter Richtung gebildet wird, wobei die erste Halbschleife an einem Startmaximum beginnt und an einem Minimum endet, welches dem zeitlich nächsten Maximum gegenüberliegt, das einen größeren Wert hat als das Startmaximum, b) Speichern der identifizierten geschlossenen Schleife und c) Entfernen der identifizierten geschlossenen Schleife aus dem Messsignal ermittelt, wobei die genannten Schritte a) bis c) wiederholt werden, bis sämtliche geschlossenen Schleifen ermittelt worden sind. Die geschlossenen Schleifen entsprechen den im Messsignal vorkommenden Schwingungen.

Bei dem Messsignal handelt es sich vorzugsweise um ein Sensorsignal eines Sensors wie er in einem Regelkreis, beispielweise einem Regelkreis mit einer Heizungs-, Lüftungs- und Klimaanlage eingesetzt wird. Der Ausdruck "Messsignal" erfasst jedoch auch Signale, die aus Sensorsignalen beispielsweise durch ein Schätzverfahren hergeleitet werden.

Das Verfahren gemäß dem unabhängigen Anspruch hat den Vorteil, dass Schwingungen in Messsignalen auch komplexer, realer Systeme mit verschiedenen, ineinander verschachtelten und sich gegenseitig beeinflussenden Regelungen von oftmals unterschiedlichen Zulieferern einfach, schnell und robust ermittelt werden können. Dabei können die Schwingungen ungeachtet des Ursprungs des Messsignals, insbesondere ungeachtet des jeweiligen Sensortyps analysiert werden. Durch den Einsatz des Rainflow-Zählverfahrens zum Ermitteln der geschlossenen Schleifen des Messsignals können auf elegante Weise auch bei Messsignalen mit hohen Datenmengen die für die Ermittlung der in den Messsignalen enthaltenen Schwingungen benötigte Datenmenge derart reduziert werden, dass eine effiziente und zeit- und ressourcensparende Analyse möglich ist.

Das Rainflow-Zählverfahren hat seinen Ursprung im Bereich der Werkstoffmechanik und wird dort zur Bestimmung der Ermüdungslebensdauer von Bauteilen eingesetzt. Die Bezeichnung "Rainflow-Zählverfahren" leitet sich aus einer Analogie mit dem Fließen von Regenwasser über Pagodendächer ab. Die Zeitachse des betreffenden Messsignals wird sich dabei um 90° im Uhrzeigersinn gedreht vorgestellt. Dabei werden als Halbschleifen (auch Halbhysteresen oder Halbzyklen genannt) die Bereiche des Messsignals ermittelt und gezählt, an denen das "Regenwasser" von einem "Dach" auf das nächste, darunterliegende Dach tropft. Insbesondere werden als Halbschleifen gezählt: i) ein (Signal-)Bereich, der an einem Extremwert beginnt und gegenüberliegend eines größeren Extremwerts endet, ii) ein Bereich, der an einem Extremwert beginnt und an der Stelle endet, an welcher das Regenwasser auftrifft, das von einem darüber liegenden Extremwert fällt, und iii) ein Bereich, der an einem Extremwert beginnt und am Ende der Zeitreihe endet. Zwei Halbschleifen identischer Größe, d.h. identischer Schwingbreite, die sich in entgegengesetzte Richtungen erstrecken (d.h. achsensymmetrisch in Bezug auf eine zur Zeitachse querliegende Achse sind) bilden eine geschlossene Schleife (auch geschlossene Hysterese oder Vollzyklus genannt). Extremwerte werden von lokalen Minima und Maxima gebildet und werden auch als Umkehrpunkte bezeichnet (siehe zum Beispiel M. Köhler et al., "Zählverfahren und Lastannahme in der Betriebsfestigkeit", Kapitel 2.4.4, Seiten 23-27, DOI 10.1007/978-3-642-13164-6_2, Springer-Verlag, 2012).

Unter Verwendung des Rainflow-Zählverfahrens können detaillierte Informationen über die in den Messsignalen auftretenden Schwingungen erhalten werden. So stellt die Schwingbreite einer Halbschleife die Amplitude derjenigen in dem Messsignal vorkommenden Schwingung dar, die der von dieser Halbschleife gebildeten geschlossenen Schleife entspricht. Ferner lässt sich der Mittelwert einer Schwingung einfach als die halbe Amplitude von deren Halbschleife ermitteln. Weiterhin ergibt sich die Periodendauer einer in dem Messsignal vorkommenden Schwingung aus der doppelten Zeitdauer der dieser Schwingung zugeordneten Halbschleife. Weiter entspricht der Startzeitpunkt einer in dem Messsignal vorkommenden Schwingung dem Startzeitpunkt der ihr zugeordneten Vollschleife, d.h. dem Startzeitpunkt von deren zeitlich erster Halbschleife. Entsprechendes gilt für den Endzeitpunkt einer Schwingung. Die zeitliche Analyse ermöglicht eine historische Auswertung des Auftretens und Verschwindens von Schwingungen in Messsignalen. Vorteilhafterweise werden dabei keine Vorabinformationen über die in einem Messsignal zu erwartenden Schwingungen benötigt.

Bevorzugt können Grenzwerte bezüglich der Schwingbreite/Amplitude einer Halbschleife und deren Zeitdauer (und somit der Periodendauer der Schwingung) vorgegeben werden, um zu berücksichtigende Schwingungen von nicht zu berücksichtigenden Schwingungen zu trennen. Zum Beispiel kann bei einer Temperaturmessung vorgegeben sein, Halbbreiten/Schwingungen mit einer Amplitude von weniger als 1°C und Schwingungen mit einer Periodendauer von mehr als 1 Stunde zu ignorieren.

Mit dem oben beschriebenen Verfahren zur Bestimmung von in einem Messsignal vorkommenden Schwingungen können Messsignale eines technischen Systems systematisch geprüft werden, wobei beispielsweise Messdaten des gleichen Typs, aber unterschiedlicher Standorte, zum Beispiel von in unterschiedlichen Gebäuden installierten Heizungs-, Lüftungs- und Klimaanlagen, miteinander verglichen werden können. Dies kann zum Beispiel mittels einer zentralen Webplattform erfolgen.

Bei einem Verfahren zur Überwachung eines technischen Systems, insbesondere einer Heizungs-, Lüftungs- und Klimaanlage, welches das obige Verfahren zur Bestimmung von in einem Messsignal vorkommenden Schwingungen verwendet, kann eine Warnung an einen Benutzer oder an Servicepersonal oder an eine Benutzergruppe ausgegeben werden, wenn beispielsweise die Amplitude (Schwingbreite) und/oder Frequenz einer in einem Messsignal vorkommenden, ermittelten Schwingung einen vorab definierten Grenzwert überschreitet. Die Ausgabe der Warnung kann mittels Displayanzeige und/oder Warnton und/oder per Email und/oder per elektronischer Nachricht nach einem anderen Protokoll erfolgen. Die Ausgabe der Warnung bzw. die Benachrichtigung kann in einer bevorzugten Ausführungsform der Erfindung je nach Amplitude oder Amplitudensumme an unterschiedliche Empfänger verteilt werden. Dies hat den Vorteil, dass bei einer höheren Abweichung, der jeweilige technische Fehler eskaliert und einer größeren Benutzergruppe mitgeteilt werden kann, um entsprechende Maßnahmen einleiten zu können.

Ferner kann ein Zähler vorgesehen sein, der bei jeder Ermittlung einer geschlossenen Schleife, d.h. einer Schwingung, z.B. um eins erhöht wird. Übersteigt der Zähler und somit die Anzahl der Schwingungen einen vorbestimmten Grenzwert, so kann eine Warnung ausgegeben werden. Ferner können die Amplituden der in einem bestimmten Zeitraum, beispielsweise einer Stunde, vorkommenden Schwingungen aufaddiert werden und eine Warnung kann erst ausgegeben werden, wenn die Summe der aufaddierten Amplituden einen vorbestimmten Grenzwert übersteigt. An die Überwachung des Systems kann sich eine Fehlerdiagnose anschließen. Das ermittelte Signal (aus den ermittelten geschlossenen Schleifen) kann weiterhin auch als Eingang für Datamining-Algorithmen zur Fehlersuche und Isolation bzw. genaueren Lokalisation von Fehlern dienen. So kann z.B. erfasst werden, wenn ein Produktionsfehler ab einer bestimmten Amplitude häufiger auftritt. Weiterhin kann das ermittelte Signal zur besseren Lokalisierung eines Fehlers dienen, insbesondere in komplexen, mehrkomponentigen technischen Systemen oder Anlagen, indem überprüft werden kann, in welcher Teilkomponente der Anlage die stärksten Schwingungen auftreten.

Zusätzlich oder alternativ zu einer Überwachung kann das obige Verfahren zur Ermittlung von in einem Messsignal vorkommenden Schwingungen zur adaptiven Regelung eines technischen Systems, insbesondere einer Heizungs-, Lüftungs- und Klimaanlage eingesetzt werden. Bei einer adaptiven Regelung passen sich die Reglerparameter an das System und Änderungen in der Prozessdynamik an. Eine adaptive Regelung wird auch als selbstlernende Regelung bezeichnet.

Die Einstellung der Parameter des adaptiven Reglers erfolgt dabei in Abhängigkeit von den in den jeweiligen Messsignalen vorkommenden Schwingungen. So werden die Reglerparameter bevorzugt derart eingestellt, dass die Amplitude der Schwingungen unter eine vorbestimmte Mindesthöhe sinkt. Das Verfahren zur Berechnung der Reglerparameter im Rahmen des Verfahrens zur Ermittlung von in Messsignalen vorkommenden Schwingungen kann dabei beispielsweise auf dem Verfahren der kleinsten Fehlerquadrate basieren. Als adaptiver Regler wird vorzugsweise ein PID-Regler eingesetzt. Alternativ oder in Kombination kann jedoch auch ein anderer Reglertyp wie beispielsweise ein Zustandsregler eingesetzt werden. Bei dem Regler kann es sich um einen mehrdimensionalen Regler handeln. Das obige Verfahren zur Ermittlung von in Messsignalen vorkommenden Schwingungen bietet somit einen systemübergreifenden, systematischen Ansatz zur Einstellung von Parametern adaptiver Regelungen.

Durch die vorgeschlagene Überwachung und Einstellung einer adaptiven Regelung können insbesondere fehlkonfigurierte Regelungen erkannt und vermieden, unübliches Verhalten von Systemkomponenten, das beispielsweise zu einer Verkürzung von deren Lebensdauer führen könnte, festgestellt und eine vorausschauende Wartung eingeleitet.

Gemäß einem weiteren Aspekt der Erfindung ist eine Recheneinheit gemäß Anspruch 11 bereitgestellt, welche eingerichtet ist, das obige Verfahren zur Ermittlung von in einem Messsignal vorkommenden Schwingungen, das obige Verfahren zur Überwachung und/oder das obige Verfahren zur Einstellung einer adaptiven Regelung auszuführen. Weiter ist ein Computerprogramm gemäß Anspruch 12 bereitgestellt, welches eingerichtet ist, das obige Verfahren zur Ermittlung von in einem Messsignal vorkommenden Schwingungen, das obige Verfahren zur Überwachung und/oder das obige Verfahren zur Einstellung einer adaptiven Regelung auszuführen. Das Computerprogramm kann auf einem maschinenlesbaren Speichermedium, gemäß Anspruch 13 beispielsweise einem EEPROM, einem

Flashspeicher oder einem Datenträger (z.B. einer DVD), gespeichert sein. Es kann ferner vorgesehen sein, das Computerprogramm auf einem zentralen Server bereitzustellen, auf welchem es über ein Rechnernetz (Internet, Intranet oder Ähnliches) ausgeführt oder von welchem es heruntergeladen werden kann. Der Zugriff auf das Computerprogramm kann über eine Webplattform erfolgen.

Weitere vorteilhafte Ausgestaltungen der Erfindung ergeben sich aus der folgenden Beschreibung und den beiliegenden Zeichnungen.

### Kurze Beschreibung der Zeichnungen

Es zeigen:
Figur 1 ein Flussdiagramm eines Verfahrens zur Ermittlung von in einem Messsignal vorkommenden Schwingungen nach einem Ausführungsbeispiel der Erfindung;
Figur 2 ein schematisches Diagramm zur Erläuterung einer Ermittlung einer geschlossenen Schleife in einem beispielhaften Messsignal;
Figur 3 ein schematisches Diagramm zur Erläuterung des Entfernens einer ermittelten geschlossenen Schleife aus dem Messsignal;
Figur 4 ein beispielhaftes Diagramm einer Überwachung eines Verdichters;
Figur 5 ein Blockdiagramm eines eindimensionalen Regelkreises mit einem adaptiven Regler;
Figur 6 ein Blockdiagramm eines mehrdimensionalen Regelkreises mit einer adaptiven Regelung und
Figur 7 eine schematische Darstellung eines Ausführungsbeispiels, bei welchem die Erfindung für eine Überwachung mehrerer Standorte eingesetzt wird.

### Ausführungsbeispiele der Erfindung

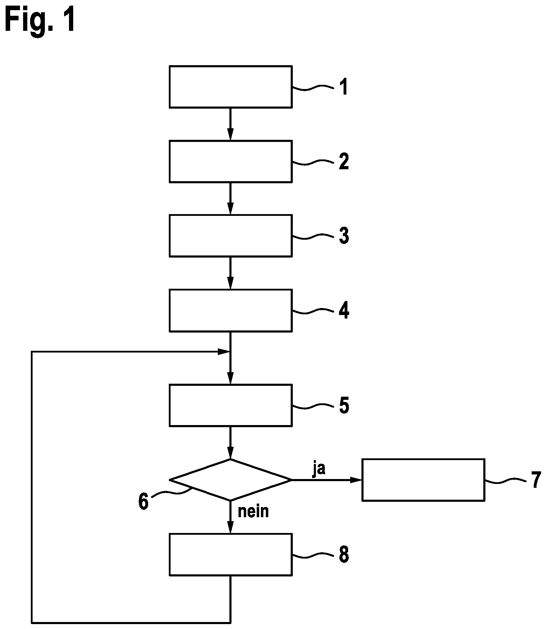

Figur 1 zeigt ein Flussdiagram eines Verfahrens zur Ermittlung von in einem Messsignal vorkommenden Schwingungen. Bei dem Messsignal kann es sich beispielsweise um einen Volumenstrom, einen Druck stromaufwärts oder stromabwärts eines Verdichters oder eine Temperatur handeln.

In Schritt 1 wird ein Messsignal von einer Recheneinheit, zum Beispiel einem Computer oder einer elektronischen Steuereinheit (nicht dargestellt), empfangen. In einem bevorzugten, fakultativen Schritt 2 wird das empfangene Messsignal auf sogenannte Ausreißer untersucht und diese werden aus dem Messsignal entfernt. Ein Messwert wird beispielsweise als Ausreißer klassifiziert, wenn er um einen bestimmten, vorab festgelegten Betrag von dessen vorhergehendem und/oder dessen nachfolgendem Messwert abweicht.

Handelt es sich bei dem Messsignal um ein analoges anstelle eines digitalen Signals, wird das Messsignal in Schritt 3 vorzugsweise quantisiert. Die Reihenfolge der Schritte 2 und 3 kann vertauscht sein.

In dem darauffolgenden Schritt 4 werden die Extremwerte des Messsignals bestimmt, beispielsweise durch Berechnung der ersten und zweiten Ableitung des Messsignals. Für die Bestimmung der Extremwerte können Toleranzen vordefiniert werden, die den Mindestbetrag, um den die Extremwerte voneinander abweichen sollen, vorgeben, um zum Beispiel minimale Schwingungen und die Wirkung von Rauschen zu vernachlässigen und dadurch die Genauigkeit der Schwingungsermittlung zu erhöhen.

Im folgenden Schritt 5 wird das Messsignal bevorzugt mittels des eingangs beschriebenen Rainflow-Zählverfahrens auf geschlossene Schleifen (Vollzyklen, Vollhysteresen) untersucht. Dabei werden im Messsignal vorhandene Halbschleifen (Halbzyklen, Halbhysteresen) ermittelt. Eine geschlossene Schleife ergibt sich aus zwei Halbschleifen gleicher Schwingbreite, aber entgegengesetzter Richtung.

Wird in Schritt 6 festgestellt, dass das Messsignal keine einzige geschlossene Schleife enthält, so wird das Verfahren in Schritt 7 beendet. Im Messsignal konnte keine Schwingung ermittelt werden.

Wird dagegen in Schritt 6 festgestellt, dass eine geschlossene Schleife und somit eine Schwingung ermittelt werden konnte, so wird diese in Schritt 8 vorzugsweise zusammen mit deren Amplitude, Startzeitpunkt, Endzeitpunkt, Periodendauer/Frequenz und/oder Mittelwert in einem Speichermedium (nicht dargestellt), z.B. einem RAM, gespeichert und die aufgefundene geschlossene Schleife wird aus dem Messsignal entfernt, wobei die verbleibenden Teile des Messsignals miteinander verbunden werden.

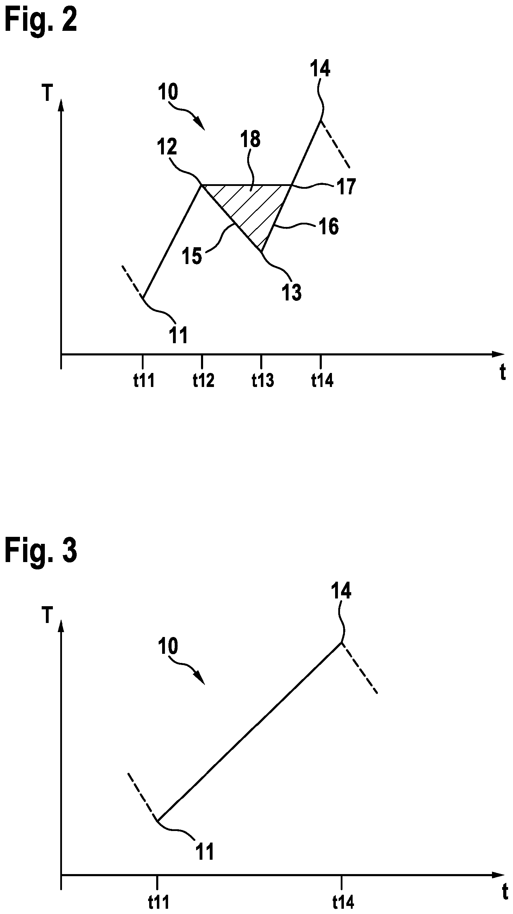

Figur 2 dient der Verdeutlichung von Schritt 5 von Figur 1. Das in Figur 2 beispielhaft und schematisch dargestellte Messsignal, bei welchem es sich z.B. um eine Temperatur T handelt, weist in dem gezeigten Zeitbereich vier Extremwerte 11, 12, 13, 14 an den Zeitpunkten t11, t12, t13 beziehungsweise t14 auf. Für eine erste Halbschleife 15, deren Schwingbreite sich von dem Maximum 12 zu dem Minimum 13 erstreckt und die mittels des Rainflow-Zählverfahrens gefunden wird, lässt sich mittels des Rainflow-Zählverfahrens eine korrespondierende zweite Halbschleife 16 in dem Messsignal 10 finden, welche eine identische Schwingbreite bei entgegengesetzter Richtung hat. Die erste Halbschleife 15 wird gefunden, da sie an dem Maximum 12 beginnt und an dem Minimum 13 endet, welches dem zeitlich nächsten Maximum 14 gegenüberliegt, das einen größeren Wert hat als das (Start-)Maximum 12 (eingangs genannte Bedingung i) des Rainflow-Zählverfahrens). Die zweite Halbschleife 16 wird gefunden, da sie an einem Extremwert (Minimum 13) beginnt und an einer Stelle 17 endet, an welcher das "Regenwasser" auftritt, das von dem Maximum 12 in Richtung der Zeitachse "heruntertropft" (eingangs genannte Bedingung ii) des Rainflow-Zählverfahrens). Die erste Halbschleife 15 und die zweite Halbschleife 16 bilden zusammen eine geschlossene Schleife, die einer Schwingung in dem Messsignal 10 entspricht.

In Schritt 8 von Figur 1 werden die identifizierte geschlossene Schleife, d.h. die entsprechende Schwingung und deren Eigenschaften, gespeichert, und aus dem Messsignal 10 gelöscht, wobei die verbleibenden Abschnitte des Messsignals miteinander verbunden werden. Letzteres ist in Figur 3 veranschaulicht. D.h. das gestrichelte Dreieck 18 in Figur 2 wird entfernt und es ergibt sich das in Figur 3 dargestellte Messsignal, welches dann mit Hilfe des Rainflow-Zählverfahrens nach weiteren geschlossenen Schleifen durchsucht wird.

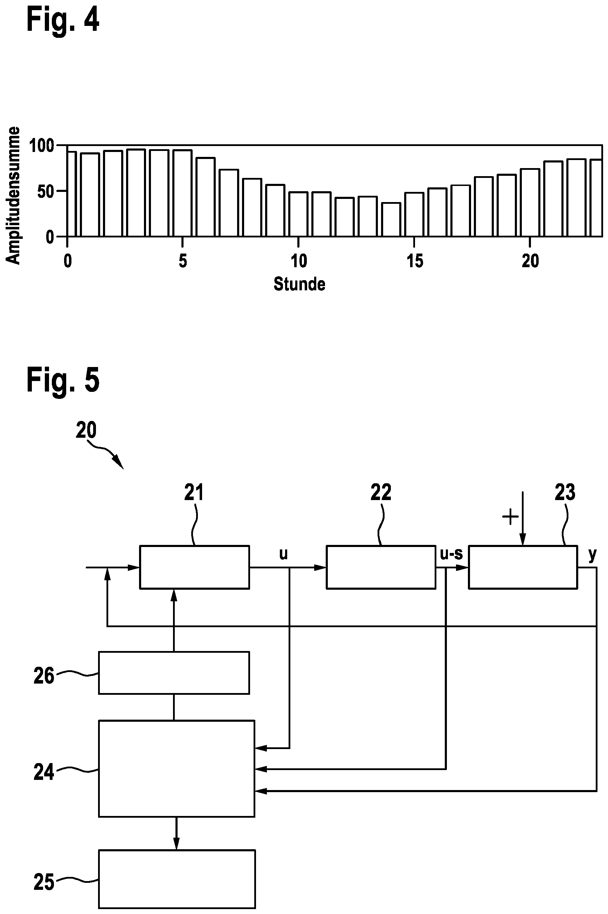

Mit Hilfe des in Figur 1 beispielshaft gezeigten Verfahrens können somit in einem Messsignal vorkommende Schwingungen ermittelt werden. Figur 4 zeigt für das Beispiel eines Verdichters einer Heizungs-, Lüftungs- und Klimaanlage die in einem Messsignal, bei welchem es sich beispielhaft um einen Druck stromabwärts des Verdichters handelt, mittels des Verfahrens ermittelten Schwingungen pro Stunde eines Tages. Dabei sind die Amplituden der für die jeweilige Stunde ermittelten Schwingungen aufaddiert und über ein gesamtes Jahr gemittelt. Wie erkennbar ist, gibt es zwischen 7:00 Uhr und 20:00 Uhr einen Rückgang bei der Höhe der aufaddierten Amplituden. Aus diesem Signal (verlauf) lässt sich schließen, dass ausserhalb des oben genannten Zeitraums, welcher der Hauptbetriebsphase entspricht, der Verdichter bei geringerer Lastanforderung häufiger takten muss. Damit kann automatisch ermittelt werden, dass außerhalb der Hauptbetriebsphase ein höherer Verschleiss auftritt.

Figur 5 zeigt einen schematisch dargestellten Regelkreis 20 mit einem adaptiven Regler 21, der vorzugsweise als adaptiver PID-Regler ausgebildet ist, einem Stellglied 22, beispielsweise einem Ventil, und einer Regelstrecke 23, die durch ein zu regelndes technisches System 23, beispielsweise eine Heizungs-, Lüftungs- und Klimaanlage, gegeben ist. Bei dem technischen System 23 von Figur 5 handelt es sich um ein einfaches, d.h. ein eindimensionales, System mit nur einem Eingangssignal (der Ausgangsgröße des Stellgliedes u_s) und nur einem Ausgangssignal (der Regelgröße y).

Beispielhaft werden das Ausgangssignal des adaptiven Reglers 21 (die Stellgröße u), die Ausgangsgröße des Stellgliedes u_s und die Regelgröße y einem Funktionsblock 24 als Messsignale zugeführt. Im Funktionsblock 24 wird auf jedem dieser Messsignale das in Figur 1 dargestellte Verfahren zur Ermittlung von in dem jeweiligen Messsignal vorkommenden Schwingungen ausgeführt. Die im Funktionsblock 24 ermittelten Schwingungen bzw. deren Eigenschaften wie Amplitude, Periodendauer etc. werden dem Funktionsblock 25 zur Überwachung und Fehlerdiagnose des technischen Systems 23 zugeführt, sodass beispielsweise bei Schwingungen hoher Amplitude Wartungszeiträume verkürzt werden können. Ferner werden die im Funktionsblock 24 ermittelten Schwingungen verwendet, um in Funktionsblock 26 die Parameter des adaptiven Reglers 21 neu so zu berechnen und einzustellen, dass die Schwingungen der Messsignale u, u_s und y minimiert werden. Die Blöcke 21, 24, 25, 26 können getrennt oder gemeinsam durch Software und/oder Hardware, beispielsweise durch ein Computerprogramm, welches auf einer Recheneinheit, z.B. einem Server, läuft, realisiert sein.

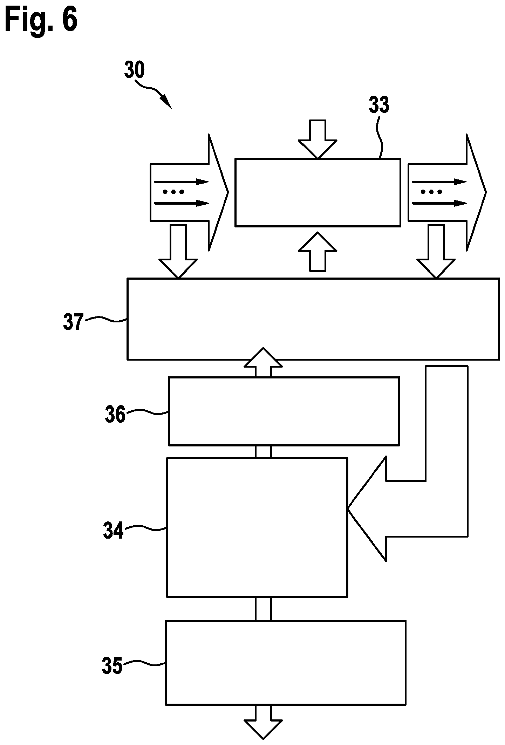

Figur 6 stellt gegenüber Figur 5 eine Erweiterung auf einen mehrdimensionalen Regelkreis 30 mit einem komplexen technischen System 33 dar, das mehrere Eingangssignale und Ausgangssignale hat. Bei der in Figur 5 gezeigten lokalen Regelung können die Parameter des adaptiven Reglers 21 nur dann geeignet mittels Funktionsblock 26 eingestellt werden, wenn die Größen/Signale, bei denen bei Fehlkonfiguration des adaptiven Reglers 21 Schwingungen auftreten, auch Eingangssignale des für den adaptiven Reglers 21 zuständigen Funktionsblocks 24 sind.

Für den in Figur 6 gezeigten mehrdimensionalen Regelkreis 30 wird eine zentrale Messsignalerfassungs- und Automatisierungseinheit 37 vorgeschlagen, die sämtliche relevanten Messsignale erfasst. Die von der Messsignalerfassungs- und Automatisierungseinheit 37 erfassten Messsignale werden einem Funktionsblock 34 zugeführt, der das in Figur 1 dargestellte Verfahren zur Ermittlung von in den Messsignalen vorkommenden Schwingungen ausführt. Die im Funktionsblock 34 ermittelten Schwingungen bzw. deren Eigenschaften werden an den Funktionsblock 35 zur Überwachung und Fehlerdiagnose des technischen Systems 33 übertragen. Ferner werden die im Funktionsblock 34 ermittelten Schwingungen und deren Eigenschaften dem Funktionsblock 36 zur Anpassung der Reglerparameter zugeführt. In Funktionsblock 36 oder 37 werden vorzugsweise Korrelationen zwischen den identifizierten Schwingungen und den im Regelkreis 30 verwendeten adaptiven Reglern ermittelt, und die Reglerparameter der am stärksten mit den jeweiligen Schwingungen korrelierten Regler werden so angepasst, dass die mit ihnen korrelierten Schwingungen minimiert werden. Die Regelung erfolgt dabei durch die zentrale Messsignalerfassungs- und Automatisierungseinheit 37. Die Funktionsblöcke 34, 35, 36, 37 können zusammen oder getrennt in Form von Software und/oder Hardware, insbesondere als ein Computerprogramm auf einem Server, realisiert werden.

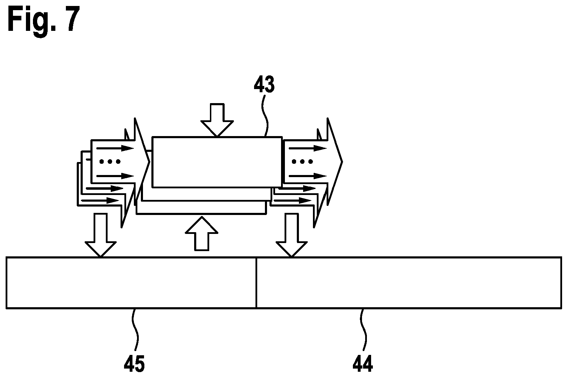

Vorteilhafterweise kann das Verfahren zur Ermittlung von in Messsignalen vorkommenden Schwingungen gemäß der Erfindung zentralisiert zur insbesondere parallelen Überwachung und/oder Regelung mehrerer Standorte 43 (d.h. mehrerer technischer Systeme), wie beispielsweise mehrerer Produktionsstätten oder Gebäude eingesetzt werden (siehe Figur 7). So können beispielsweise die Heizungs-, Lüftungs- und Klimaanlagen verschiedener Gebäude parallel zentral überwacht und/oder geregelt werden. Sämtliche erfassten Messsignale der Standorte 43 werden einem zentralen Funktionsblock 44 zugeführt, der die in diesen vorkommenden Schwingungen und deren Eigenschaften mittels des in Figur 1 dargestellten Verfahrens ermittelt. Der Funktionsblock 44 ist bevorzugt als auf einem zentralen Server laufende Software (Computerprogramm) implementiert. Über eine Webplattform 45 kann nun auf den Server und die ermittelten Schwingungen zugegriffen werden, und diese können auf der Webplattform für Überwachungs- und Fehlerdiagnosezwecke zentral ausgewertet und angezeigt werden. Dafür kann über die Webplattform auf entsprechende auf dem Server installierte Überwachungs- und Diagnosesoftware zugegriffen werden. Ferner kann über die Webplattform eine adaptive Anpassung von Reglerparametern veranlasst werden, wobei die Neuberechnung der Reglerparameter ebenfalls über eine auf dem Server installierte Software realisiert werden kann. Derart lässt sich beispielsweise eine standortübergreifende Leistungsanalyse und gegebenenfalls Energieverbrauchssenkung durchführen.

## Patentansprüche

1. Verfahren zur Bestimmung von in einem Messsignal vorkommenden Schwingungen mit den folgenden Schritten:
- Empfangen eines Messsignals (10; u, u_s, y),
- Bestimmen der Extremwerte (11, 12, 13, 14) des empfangenen Messsignals (10), **gekennzeichnet durch**
- Ermitteln von geschlossenen Schleifen des Messsignals (10; u, u_s, y), wobei zum Ermitteln der geschlossenen Schleifen des Messsignals (10; u, u_s, y) das Rainflow-Zählverfahren eingesetzt wird und die geschlossenen Schleifen den im Messignal vorkommenden Schwingungen entsprechen, durch
a) Identifizieren einer geschlossenen Schleife im Messsignal (10; u, u_s, y), wobei die geschlossene Schleife durch eine erste Halbschleife (15) und eine zur ersten Halbschleife (15) korrespondierende zweite Halbschleife (16) mit identischer Schwingbreite und entgegengesetzter Richtung gebildet wird, wobei die erste Halbschleife (15) an einem Startmaximum (12) beginnt und an einem Minimum (13) endet, welches dem zeitlich nächsten Maximum (14) gegenüberliegt, das einen größeren Wert hat als das Startmaximum (12),
b) Speichern der identifizierten geschlossenen Schleife,
c) Entfernen der identifizierten geschlossenen Schleife aus dem Messsignal (10), und
d) Wiederholen der Schritte a) bis c) bis sämtliche geschlossenen Schleifen ermittelt worden sind.

2. Verfahren nach Anspruch 1, wobei die Amplitude einer in dem Messsignal (10; u, u_s, y) vorkommenden Schwingung aus der Schwingbreite einer Halbschleife (15, 16) der dieser Schwingung entsprechenden geschlossenen Schleife, die Periodendauer einer in dem Messsignal (10; u, u_s, y) vorkommenden Schwingung aus der zweifachen Zeitdauer der Halbschleife (15, 16), und/oder der Startzeitpunkt einer in dem Messsignal (10; u, u_s, y) vorkommenden Schwingung aus dem Startzeitpunkt der Halbschleife (15, 16) ermittelt werden.

3. Verfahren nach einem der vorhergehenden Ansprüche, wobei für jede ermittelte geschlossene Schleife ein Zähler erhöht wird.

4. Verfahren nach einem der vorhergehenden Ansprüche, wobei vor dem Bestimmen der Extremwerte (11, 12, 13, 14) des empfangenen Messsignals (10; u, u_s, y) Ausreißer aus dem Messsignal (10; u, u_s, y) entfernt werden.

5. Verfahren zur Überwachung eines technischen Systems (23; 33; 43), mit den folgenden Schritten:
- für ein oder mehrere Messsignale (10; u, u_s, y) Bestimmen der in dem jeweiligen Messsignal (10; u, u_s, y) vorkommenden Schwingungen mit einem Verfahren nach einem der vorhergehenden Ansprüche,
- Ausgeben einer Warnung, wenn die Amplitude einer in einem Messsignal (10; u, u_s, y) vorkommenden Schwingung, die Anzahl der in einem Messsignal (10; u, u_s, y) vorkommenden Schwingungen und/oder die aufaddierten Amplituden der in einem Messsignal (10; u, u_s, y) vorkommenden Schwingungen einen vorbestimmten Grenzwert überschreiten.

6. Verfahren nach Anspruch 5, welches zur parallelen Überwachung mehrerer technischer Systeme (43) eingesetzt wird, wobei das Verfahren über eine Webplattform (45) ausgeführt werden kann.

7. Verfahren zur adaptiven Regelung eines technischen Systems (23; 33; 43), mit den folgenden Schritten:
- für ein oder mehrere Messsignale (10; u, u_s, y) Bestimmen der in dem jeweiligen Messsignal (10; u, u_s, y) vorkommenden Schwingungen mit einem Verfahren nach einem der Ansprüche 1 bis 4,
- Einstellen der Parameter eines adaptiven Reglers (21), insbesondere eines adaptiven PID-Reglers, für das technische System (23; 33; 43) in Abhängigkeit von den in den jeweiligen Messsignalen (10; u, u_s, y) vorkommenden Schwingungen.

8. Verfahren nach Anspruch 7, wobei das technische System (33) mehrere adaptive Regler aufweist und die Parameter eines jeden adaptiven Reglers in Abhängigkeit von denjenigen Schwingungen eingestellt werden, die mit dem jeweiligen adaptiven Regler korreliert sind.

9. Verfahren nach Anspruch 7 oder 8, welches zur adaptiven Regelung mehrerer technischer Systeme (43) eingesetzt wird, wobei das Verfahren über eine Webplattform (45) ausgeführt werden kann.

10. Verfahren nach einem der Ansprüche 5 bis 9, wobei das technische System (33) eine Heizungs-, Lüftungs- und Klimaanlage ist.

11. Recheneinheit, welche eingerichtet ist, ein Verfahren nach einem der vorhergehenden Ansprüche auszuführen.

12. Computerprogramm, welches eine Recheneinheit veranlasst, ein Verfahren nach einem der Ansprüche 1 bis 10 auszuführen, wenn es auf der Recheneinheit ausgeführt wird.

13. Maschinenlesbares Speichermedium, auf welchem das Computerprogramm nach Anspruch 12 gespeichert ist.

## Claims

1. Method for determining oscillations occurring in a measurement signal, having the following steps of:
- receiving a measurement signal (10; u, u_s, y),
- determining the extreme values (11, 12, 13, 14) of the received measurement signal (10), **characterized by**
- determining closed loops of the measurement signal (10; u, u_s, y), wherein the rainflow counting method is used to determine the closed loops of the measurement signal (10; u, u_s, y) and the closed loops correspond to the oscillations occurring in the measurement signal, by
a) identifying a closed loop in the measurement signal (10; u, u_s, y), wherein the closed loop is formed by a first half-loop (15) and a second half-loop (16) which corresponds to the first half-loop (15) and has an identical oscillation width and an opposite direction, wherein the first half-loop (15) begins at a starting maximum (12) and ends at a minimum (13) which is opposite the temporally closest maximum (14) which has a greater value than the starting maximum (12),
b) storing the identified closed loop,
c) removing the identified closed loop from the measurement signal (10), and
d) repeating steps a) to c) until all closed loops have been determined.

2. Method according to Claim 1, wherein the amplitude of an oscillation occurring in the measurement signal (10; u, u_s, y) is determined from the oscillation width of a half-loop (15, 16) of the closed loop corresponding to this oscillation, the period duration of an oscillation occurring in the measurement signal (10; u, u_s, y) is determined from twice the duration of the half-loop (15, 16), and/or the starting time of an oscillation occurring in the measurement signal (10; u, u_s, y) is determined from the starting time of the half-loop (15, 16).

3. Method according to one of the preceding claims, wherein a counter is incremented for each determined closed loop.

4. Method according to one of the preceding claims, wherein, before determining the extreme values (11, 12, 13, 14) of the received measurement signal (10; u, u_s, y), outliers are removed from the measurement signal (10; u, u_s, y).

5. Method for monitoring a technical system (23; 33; 43), having the following steps of:
- determining, for one or more measurement signals (10; u, u_s, y), the oscillations occurring in the respective measurement signal (10; u, u_s, y) using a method according to one of the preceding claims,
- outputting a warning if the amplitude of an oscillation occurring in a measurement signal (10; u, u_s, y), the number of oscillations occurring in a measurement signal (10; u, u_s, y) and/or the added amplitudes of the oscillations occurring in a measurement signal (10; u, u_s, y) exceed(s) a predetermined limit value.

6. Method according to Claim 5, which is used to monitor a plurality of technical systems (43) in a parallel manner, wherein the method can be carried out using a web platform (45).

7. Method for adaptively controlling a technical system (23; 33; 43), having the following steps of:
- determining, for one or more measurement signals (10; u, u_s, y), the oscillations occurring in the respective measurement signal (10; u, u_s, y) using a method according to one of Claims 1 to 4,
- setting the parameters of an adaptive controller (21), in particular of an adaptive PID controller, for the technical system (23; 33; 43) on the basis of the oscillations occurring in the respective measurement signals (10; u, u_s, y).

8. Method according to Claim 7, wherein the technical system (33) has a plurality of adaptive controllers and the parameters of each adaptive controller are set on the basis of those oscillations which are correlated with the respective adaptive controller.

9. Method according to Claim 7 or 8, which is used to adaptively control a plurality of technical systems (43), wherein the method can be carried out using a web platform (45) .

10. Method according to one of Claims 5 to 9, wherein the technical system (33) is a heating, ventilation and air-conditioning system.

11. Computing unit, which is configured to carry out a method according to one of the preceding claims.

12. Computer program which causes a computing unit to carry out a method according to one of Claims 1 to 10 when it is executed on the computing unit.

13. Machine-readable storage medium, on which the computer program according to Claim 12 is stored.

## Revendications

1. Procédé de détermination de vibrations se produisant dans un signal de mesure, comprenant les étapes suivantes :
- réception d'un signal de mesure (10 ; u, u_s, y),
- détermination des valeurs extrêmes (11, 12, 13, 14) du signal de mesure reçu (10),
**caractérisé par**
- la détermination de boucles fermées du signal de mesure (10 ; u, u_s, y), le procédé de comptage Rainflow étant utilisé pour déterminer les boucles fermées du signal de mesure (10 ; u, u_s, y), et les boucles fermées correspondant aux vibrations qui se produisent dans le signal de mesure, par
a) l'identification d'une boucle fermée dans le signal de mesure (10 ; u, u_s, y), la boucle fermée étant formée par une première demi-boucle (15) et une deuxième demi-boucle (16) correspondant à la première demi-boucle (15), ayant une amplitude de vibrations identique et une direction opposée, la première demi-boucle (15) commençant à un maximum de début (12) et se terminant à un minimum (13) opposé au maximum (14) le plus proche dans le temps, qui a une valeur plus grande que le maximum de début (12),
b) l'enregistrement de la boucle fermée identifiée,
c) la suppression de la boucle fermée identifiée du signal de mesure (10), et
d) la répétition des étapes a) à c) jusqu'à ce que toutes les boucles fermées aient été identifiées.

2. Procédé selon la revendication 1, dans lequel l'amplitude d'une vibration apparaissant dans le signal de mesure (10 ; u, u_S, y) est déterminée à partir de la largeur de vibration d'une demi-boucle (15, 16) de la boucle fermée correspondant à cette vibration, la durée de période d'une boucle fermée apparaissant dans le signal de mesure (10 ; u, u_s, y) à partir du double de la durée de la demi-boucle (15, 16), et/ou l'instant de début d'une vibration se produisant dans le signal de mesure (10 ; u, u_s, y) à partir de l'instant de début de la demi-boucle (15, 16).

3. Procédé selon l'une des revendications précédentes, dans lequel un compteur est incrémenté pour chaque boucle fermée déterminée.

4. Procédé selon l'une des revendications précédentes, dans lequel, avant de déterminer les valeurs extrêmes (11, 12, 13, 14) du signal de mesure reçu (10 ; u, u_s, y), les valeurs aberrantes du signal de mesure (10 ; u, u_s, y) sont éliminées.

5. Procédé de surveillance d'un système technique (23 ; 33 ; 43), comprenant les étapes suivantes :
- pour un ou plusieurs signaux de mesure (10 ; u, u_s, y), déterminer au moyen d'un procédé selon l'une des revendications précédentes les vibrations apparaissant dans le signal de mesure respectif (10 ; u, u_s, y),
- émettre un avertissement lorsque l'amplitude d'une vibration se produisant dans un signal de mesure (10 ; u, u_s, y), le nombre de vibrations se produisant dans un signal de mesure (10 ; u, u_s, y) et/ou les amplitudes additionnées des vibrations se produisant dans un signal de mesure (10 ; u, u_s, y) dépassent une valeur limite prédéterminée.

6. Procédé selon la revendication 5, qui est utilisé pour la surveillance en parallèle de plusieurs systèmes techniques (43), le procédé étant apte à être mis en œuvre via une plateforme web (45).

7. Procédé de régulation adaptative d'un système technique (23 ; 33 ; 43), comprenant les étapes suivantes :
- pour un ou plusieurs signaux de mesure (10 ; u, u_s, y), déterminer au moyen d'un procédé selon l'une des revendications 1 à 4 les vibrations apparaissant dans le signal de mesure respectif (10 ; u, u_s, y),
- régler les paramètres d'un régulateur adaptatif (21), notamment d'un régulateur adaptatif PID, pour le système technique (23 ; 33 ; 43) en fonction des vibrations se produisant dans les signaux de mesure respectifs (10 ; u, u_s, y).

8. Procédé selon la revendication 7, dans lequel le système technique (33) comprend plusieurs régulateurs adaptatifs et les paramètres de chaque régulateur adaptatif sont réglés en fonction des vibrations qui sont corrélées avec le régulateur adaptatif respectif.

9. Procédé selon la revendication 7 ou la revendication 8, qui est utilisé pour la régulation adaptative de plusieurs systèmes techniques (43), le procédé étant apte à être mis en œuvre via une plateforme web (45) .

10. Procédé selon l'une des revendications 5 à 9, dans lequel le système technique (33) est un système de chauffage, de ventilation et de climatisation.

11. Unité de calcul agencée pour mettre en œuvre un procédé selon l'une quelconque des revendications précédentes.

12. Programme informatique amenant une unité de calcul à mettre en œuvre un procédé selon l'une des revendications 1 à 10 lorsqu'il est exécuté sur l'unité de calcul.

13. Support de stockage lisible par machine sur lequel est stocké le programme d'ordinateur selon la revendication 12.
